# EUROPÄISCHE PATENTANMELDUNG

(11) **EP 4 212 844 A1**
(43) Veröffentlichungstag der Anmeldung: **19.07.2023**
(21) Anmeldenummer: 22211282.3
(22) Anmeldetag: 05.12.2022
(51) Int. Cl.: G01M 17/007, B60W 40/00

(54) **VERFAHREN ZUR BESTIMMUNG EINES FAHRZEUGZUSTANDS**

(30) Priorität: 14.01.2022 DE 102022200393
(71) Anmelder: Continental Reifen Deutschland GmbH, 30165 Hannover (DE)
(72) Erfinder: Kurz, Martin, 30165 Hannover (DE); Trujillo Martinez, Mauricio, 30165 Hannover (DE)
(74) Vertreter: Continental Corporation

(57) **Zusammenfassung**

Die Erfindung betrifft ein Verfahren zur Bestimmung eines Fahrzeugzustands eines Fahrzeugs (1), wobei das Fahrzeug (1) mindestens einen Reifen (2) aufweist, aufweisend einen der folgenden Schritte:
- Bereitstellen eines Fahrzeugs (1), wobei das Fahrzeug (1) eine Erfassungsvorrichtung (3) aufweist, wobei die Erfassungsvorrichtung (3) zur Erfassung einer physikalisch beschreibbaren Größe des Fahrzeugs (1) vorgesehen ist und wobei die Erfassungsvorrichtung (3) eine Verarbeitungskomponente (4) aufweist, wobei mittels der Verarbeitungskomponente (4) die erfasste physikalisch beschreibbare Größe verarbeitet werden kann;
- Erfassen einer physikalisch beschreibbaren Größe des Fahrzeugs (1) mittels der Erfassungsvorrichtung (3);
- Zuordnen eines Erfassungswertes zu der erfassten physikalisch beschreibbaren Größe;
- Vergleichen des Erfassungswertes mit einem Schwellenwert;
- Bestimmen eines Fahrzeugzustands in Abhängigkeit des Vergleichens des Erfassungswertes mit einem Schwellenwert.

## Beschreibung

Die Erfindung betrifft ein Verfahren zur Bestimmung eines Fahrzeugzustands eines Fahrzeugs. Dabei weist das Verfahren einen der folgenden Schritte auf:
- Bereitstellen eines Fahrzeugs, wobei das Fahrzeug eine Erfassungsvorrichtung aufweist, wobei die Erfassungsvorrichtung zur Erfassung einer physikalisch beschreibbaren Größe des Fahrzeugs vorgesehen ist und wobei die Erfassungsvorrichtung eine Verarbeitungskomponente aufweist, wobei mittels der Verarbeitungskomponente die erfasste physikalisch beschreibbare Größe verarbeitet werden kann;
- Erfassen einer physikalisch beschreibbaren Größe des Fahrzeugs mittels der Erfassungsvorrichtung;
- Zuordnen eines Erfassungswertes zu der erfassten physikalisch beschreibbaren Größe.

Bei einer physikalisch beschreibbaren Größe handelt es sich insbesondere um eine Ortsangabe und/oder eine Zeitangabe und/oder um eine physikalische Größe, wie beispielsweise eine Geschwindigkeit, eine Beschleunigung, eine Temperatur oder einen Druck.

Das Zuordnen des Erfassungswertes zu der erfassten physikalisch beschreibbaren Größe kann mittels der Verarbeitungskomponente selbst, also in einem Front-End, oder mittels einer externen Komponente, also in einem Back-End, erfolgen. Bei der externen Komponente handelt es sich um eine außerhalb des Fahrzeugs angeordnete Komponente. Bei der externen Komponente kann es sich beispielsweise um einen Computer handeln.

Bei dem Fahrzeugzustand kann es sich um einen Zustand handeln, wonach das Fahrzeug beispielsweise gestohlen worden ist oder wonach das Fahrzeug beispielsweise während eines bestimmten Zeitraumes mit überhöhter Geschwindigkeit gefahren wird oder wonach das Fahrzeug während eines bestimmten Zeitraumes zu hohen positiven oder zu hohen negativen Beschleunigungen ausgesetzt wird.

Aus dem Stand der Technik sind Verfahren zur Bestimmung
eines Fahrzeugzustands eines Fahrzeugs bekannt. Bei den aus dem Stand der Technik bekannten Verfahren zur Bestimmung eines Fahrzeugzustands eines Fahrzeugs ist es auch bekannt, anhand von physikalisch beschreibbaren Größen des Fahrzeugs eine Analyse vorzunehmen, welcher Fahrzugszustand des Fahrzeugs vorliegt. Bei diesen aus dem Stand der Technik bekannten Verfahren könnte mit der Analyse ein erhöhter Aufwand einhergehen.

Der Erfindung liegt daher die Aufgabe zugrunde ein Verfahren bereitzustellen, wobei mittels des Verfahrens auf technisch einfachere Weise ein Fahrzeugzustand eines Fahrzeugs bestimmt werden kann.

Gelöst wird die erfindungsgemäß gestellte Aufgabe dadurch, dass das Verfahren die folgenden weiteren Schritte aufweist:
- Vergleichen des Erfassungswertes mit einem Schwellenwert;
- Bestimmen eines Fahrzeugzustands in Abhängigkeit des Vergleichens des Erfassungswertes mit einem Schwellenwert.

Das Vergleichen des Erfassungswertes mit einem Schwellenwert und/oder das Bestimmen eines Fahrzeugzustands in Abhängigkeit des Vergleichens des Erfassungswertes mit einem Schwellenwert können mittels der Verarbeitungskomponente selbst, also in einem Front-End, oder mittels einer externen Komponente, also in einem Back-End, erfolgen. Bei der externen Komponente handelt es sich um eine außerhalb des Fahrzeugs angeordnete Komponente. Bei der externen Komponente kann es sich beispielsweise um einen Computer handeln.

Der Schwellenwert ist insbesondere ein für eine ganze Fahrzeuggruppe geltender Schwellenwert. Ein solcher Schwellenwert ist erfindungsgemäß zunächst für eine ganze Fahrzeuggruppe bestimmt oder festgelegt worden. Bei einer Fahrzeuggruppe kann es sich beispielsweise um Fahrzeuge eines gleichen Bautyps, eines gleichen Verwendungstyps oder eines gleichen Konstruktionstyps handeln.

Durch den erfindungsgemäßen Umstand, wonach, das Verfahren die zuvor genannten weiteren Schritte aufweist, wird lediglich ein Vergleich mit einem Schwellenwert vorgenommen. Eine weitere und gegebenenfalls zeitaufwändigere und umfangreichere Analyse der physikalisch erfassbaren Größe ist damit nicht erforderlich.

Somit wird ein verbessertes Verfahren bereitgestellt, mittels dem auf einfachere Weise ein Fahrzeugzustand bestimmt werden kann.

Weitere vorteilhafte Ausgestaltungsformen der vorliegenden Erfindung sind Gegenstand der Unteransprüche.

Gemäß einer vorzugsweisen Ausgestaltungsform der vorliegenden Erfindung handelt es sich bei der physikalisch beschreibbaren Größe um eine Beschleunigung des Fahrzeugs oder um eine räumliche Position des Fahrzeugs oder um eine Beschleunigung des mindestens einen Reifens oder um eine Innentemperatur des mindestens einen Reifens oder um einen Innendruck des mindestens einen Reifens.

Die räumliche Position des Fahrzeugs kann beispielsweise anhand von Daten des Globalen Positionsbestimmungssystems, Global Positioning System GPS, oder ähnlicher lokaler oder globaler Systeme zur Bestimmung von Gebietskoordinaten ermittelt werden.

Die Erfassung der Innentemperatur des mindestens einen Reifens kann gemäß einer bevorzugten Ausführungsform des Verfahrens insbesondere in Abhängigkeit eines ausreichenden inneren Druckes des mindestens einen Reifens und/oder abhängig von äußeren Temperaturbedingungen, beispielswese einer Außentemperatur bezüglich des mindestens einen Reifens, und/oder eines Grades einer Sonneneinstrahlung auf das Fahrzeug oder den mindestens einen Reifen vorgenommen werden. Dazu werden diese äußeren Temperaturbedingen gemäß einer weiteren bevorzugten Ausführungsform des erfindungsgemäßen Verfahrens sensorisch erfasst.

Gemäß einer nächsten vorzugsweisen Ausgestaltungsform der vorliegenden Erfindung handelt es sich bei der physikalisch beschreibbaren Größe um eine Beschleunigung des mindestens einen Reifens, um eine Längsbeschleunigung oder Querbeschleunigung des mindestens einen Reifens oder um eine überlagerte Längs- und Querbeschleunigung des mindestens einen Reifens.
Bei der überlagerten Längs- und Querbeschleunigung des Reifens handelt es sich um eine Superposition oder Überlagerung der Längsbeschleunigung des Reifens mit der Querbeschleunigung des Reifens.

Gemäß einer nächsten vorzugsweisen Ausgestaltungsform der vorliegenden Erfindung handelt es sich bei der physikalisch beschreibbaren Größe um eine Beschleunigung des Fahrzeugs, um eine Längsbeschleunigung oder Querbeschleunigung des Fahrzeugs oder um eine überlagerte Längs- und Querbeschleunigung des Fahrzeugs.
Bei der überlagerten Längs- und Querbeschleunigung des Fahrzeugs handelt es sich um eine Superposition oder Überlagerung der Längsbeschleunigung des Fahrzeugs mit der Querbeschleunigung des Fahrzeugs.

Gemäß einer nächsten vorzugsweisen Ausgestaltungsform der vorliegenden Erfindung wird die physikalisch beschreibbare Größe mehrfach zeitlich nachfolgend erfasst und der jeweils erfassten physikalisch beschreibbaren Größe wird ein jeweiliger Erfassungswert zugeordnet, wobei jeder jeweilige Erfassungswert mit dem Schwellenwert verglichen wird, wobei der Fahrzeugzustand des Fahrzeugs in Abhängigkeit einer Zeitreihenanalyse des Vergleichens des jeweiligen Erfassungswertes mit dem Schwellenwert bestimmt wird.

Durch den erfindungsgemäßen Umstand, wonach die physikalisch beschreibbare Größe mehrfach zeitlich nachfolgend erfasst wird und der jeweils erfassten physikalisch beschreibbaren Größe ein jeweiliger Erfassungswert zugeordnet wird, wobei jeder jeweilige Erfassungswert mit dem Schwellenwert verglichen wird, wobei der Fahrzeugzustand des Fahrzeugs in Abhängigkeit einer Zeitreihenanalyse des Vergleichens des jeweiligen Erfassungswertes mit dem Schwellenwert bestimmt wird, kann eine Korrektur des Fahrzeugzustands vorgenommen werden. Hintergrund der Möglichkeit, dass eine Korrektur des Fahrzeugzustands vorgenommen werden kann, ist, dass mittels einer Zeitreihenanalyse etwaige Fehlerfassungen der physikalisch beschreibbaren Größe oder ein statistisch begründbares Verhalten der physikalisch beschreibbaren Größe erkannt und somit berücksichtigt werden können.

Gemäß einer nächsten vorzugsweisen Ausgestaltungsform der vorliegenden Erfindung wird die physikalisch beschreibbare Größe in regelmäßigen Zeitintervallen erfasst. Beispielhafte Zeitintervalle sind 1 bis 10 Sekunden oder 5 Minuten.

Gemäß einer nächsten vorzugsweisen Ausgestaltungsform der vorliegenden Erfindung wird ein Mittelwert einer Mehrzahl jeweiliger Erfassungswerte gebildet und der Mittelwert wird mit dem Schwellenwert verglichen, wobei der Fahrzeugzustand des Fahrzeugs in Abhängigkeit des Vergleichens des Mittelwertes mit dem Schwellenwert bestimmt wird.

Gemäß einer nächsten vorzugsweisen Ausgestaltungsform der vorliegenden Erfindung handelt es sich bei dem Mittelwert um einen fließenden Mittelwert.

Durch den erfindungsgemäßen Umstand, wonach es sich bei dem Mittelwert um einen fließenden Mittelwert handelt, können die einem bestimmten Erfassungswert zeitlich vorhergehenden Erfassungswerte berücksichtigt werden. Durch die Berücksichtigung dieses zeitlich vorhergehenden Verlaufs der Erfassungswerte können etwaige Fehlerfassungen der physikalisch beschreibbaren Größe oder ein statistisch begründbares Verhalten der physikalisch beschreibbaren Größe erkannt und somit berücksichtigt werden.

Gemäß einer nächsten vorzugsweisen Ausgestaltungsform der vorliegenden Erfindung wird die Geschwindigkeit des Fahrzeugs bestimmt und der Fahrzeugzustand des Fahrzeugs wird in Abhängigkeit der Geschwindigkeit des Fahrzeugs bestimmt.

Gemäß einer nächsten vorzugsweisen Ausgestaltungsform der vorliegenden Erfindung wird eine Zeitdauer, während der ein Schwellenwert durch einen Erfassungswert erreicht oder überschritten wird, bestimmt und der Fahrzeugzustand des Fahrzeugs wird in Abhängigkeit dieser Zeitdauer bestimmt. Die Zeitdauer kann beispielsweise mindestens 30 Sekunden betragen.

Gemäß einer nächsten vorzugsweisen Ausgestaltungsform der vorliegenden Erfindung wird eine Zeitdauer, während der ein Schwellenwert durch einen Mittelwert des Erfassungswertes erreicht oder überschritten wird, bestimmt und der Fahrzeugzustand des Fahrzeugs wird in Abhängigkeit dieser Zeitdauer bestimmt. Die Zeitdauer kann beispielsweise mindestens 30 Sekunden betragen.

Gemäß einer nächsten vorzugsweisen Ausgestaltungsform der vorliegenden Erfindung wird eine Fahrbahnbedingung bestimmt und der Fahrzeugzustand des Fahrzeugs wird in Abhängigkeit dieser Fahrbahnbedingung bestimmt.

Bei der Fahrbahnbedingung kann es sich beispielsweise um eine Fahrbahnbeschaffenheit handeln, insbesondere um die Fahrbahnuntergrundbeschaffenheit, also beispielsweise um den Umstand, ob der Fahrbahnuntergrund aus Schotter, Sand oder Asphalt ausgebildet ist.

Bei der Fahrbahnbedingung kann es sich weiter beispielsweise um eine Fahrbahnverlaufsbeschaffenheit handeln, insbesondere der Umstand, ob der Fahrbahnverlauf bergab oder bergauf führt oder ob der Fahrbahnverlauf einer Serpentine folgt.

Gemäß einer nächsten vorzugsweisen Ausgestaltungsform der vorliegenden Erfindung wird die Fahrbahnbedingung sensorisch erfasst.

Gemäß einer nächsten vorzugsweisen Ausgestaltungsform der vorliegenden Erfindung wird eine Umweltbedingung bestimmt und der Fahrzeugzustand des Fahrzeugs wird in Abhängigkeit dieser Umweltbedingung bestimmt.

Bei der Umweltbedingung kann es sich weiter beispielsweise um eine Wetterbedingung handeln, also beispielsweise um den Umstand, ob es im Bereich des Fahrzeugs regnet und insbesondere wie stark der Regen ist, ob Schnee auf einer Fahrbahn des Fahrzeugs liegt und insbesondere um wieviel Schnee es sich handelt oder ob die Fahrbahn des Fahrzeugs eisbedeckt ist und insbesondere welche Eigenschaften die Eisdecke der Fahrbahn aufweist.

Gemäß einer nächsten vorzugsweisen Ausgestaltungsform der vorliegenden Erfindung wird die Umweltbedingung sensorisch erfasst, vorzugsweise werden Daten über einen Regen anhand von Scheibenwischerdaten einer Scheibenwischeranlage des Fahrzeugs erfasst.

Gemäß einer nächsten vorzugsweisen Ausgestaltungsform der vorliegenden Erfindung wird die physikalisch beschreibbare Größe nach regelmäßigen Fahrtstrecken erfasst und der jeweils erfassten physikalisch beschreibbaren Größe wird ein jeweiliger Erfassungswert zugeordnet, wobei jeder jeweilige Erfassungswert mit dem Schwellenwert verglichen wird, wobei der Fahrzeugzustand des Fahrzeugs in Abhängigkeit einer Analyse des Vergleichens des jeweiligen Erfassungswertes mit dem Schwellenwert bestimmt wird Bei der Fahrtstrecke handelt es sich um eine Fahrtstrecke des Fahrzeugs. Beispielsweise handelt es sich bei der regelmäßigen Fahrtstrecke um eine Fahrtstrecke von 10 km Länge.

Durch den erfindungsgemäßen Umstand, wonach die physikalisch beschreibbare Größe nach regelmäßigen Fahrtstrecken erfasst wird und der jeweils erfassten physikalisch beschreibbaren Größe wird ein jeweiliger Erfassungswert zugeordnet wird, wobei jeder jeweilige Erfassungswert mit dem Schwellenwert verglichen wird, wobei der Fahrzeugzustand des Fahrzeugs in Abhängigkeit einer Analyse des Vergleichens des jeweiligen Erfassungswertes mit dem Schwellenwert bestimmt wird, kann eine Fahrtstreckenanalyse vorgenommen werden und die Bestimmung des Fahrzeugzustands kann unter Berücksichtigung dieser Fahrtstreckenanalyse vorgenommen werden. Etwaige Fahrtstreckeneigenschaften, die zu einer spezifischen erfassten physikalisch beschreibbaren Größe führen könnten, können somit berücksichtigt werden.

Gemäß einer nächsten vorzugsweisen Ausgestaltungsform der vorliegenden Erfindung wird mittels der Erfassungsvorrichtung ein Signal gesendet, wobei das Signal eine Information über die erfasste physikalisch beschreibbare Größe enthält.

Durch den erfindungsgemäßen Umstand, wonach mittels der Erfassungsvorrichtung ein Signal gesendet wird, wobei das Signal eine Information über die erfasste physikalisch beschreibbare Größe enthält, kann eine Auswertung oder Verwendung der Information über die erfasste physikalisch beschreibbare Größe beispielsweise mittels einer externen Elektronischen Datenverarbeitungsanlage oder einem Computer vorgenommen werden.

Gemäß einer weiteren bevorzugten Ausführungsform der vorliegenden Erfindung wird eine Sendung des Signals unmittelbar nach der Erfassung der physikalisch beschreibbaren Größe vorgenommen. Dadurch, dass eine Sendung des Signals unmittelbar nach der Erfassung der physikalisch beschreibbaren Größe vorgenommen wird, kann eine Echtzeitübertragung der Information über die physikalisch beschreibbare Größe ermöglicht werden.

Gemäß einer nächsten vorzugsweisen Ausgestaltungsform der vorliegenden Erfindung enthält das Signal Informationen über eine Mehrzahl von erfassten physikalisch beschreibbaren Größen.

Gemäß einer nächsten vorzugsweisen Ausgestaltungsform der vorliegenden Erfindung wird das Signal in regelmäßigen zeitlichen Abständen, beispielsweise einmal pro Tag, gesendet.

Durch den erfindungsgemäßen Umstand, wonach das Signal in regelmäßigen zeitlichen Abständen gesendet wird, kann eine Echtzeitübertragung der Informationen über die physikalisch beschreibbare Größe an eine externe Analyse- oder Auswertevorrichtung ermöglicht werden.

Insbesondere können sämtliche erfindungsgemäßen Schritte des Verfahrens mittels der Verarbeitungskomponente selbst, also in einem Front-End, oder mittels einer externen Komponente, also in einem Back-End, erfolgen. Bei der externen Komponente handelt es sich um eine außerhalb des Fahrzeugs angeordnete Komponente. Bei der externen Komponente kann es sich beispielsweise um einen Computer handeln.

Weitere Vorteile, Merkmale und Einzelheiten, auf die die Erfindung in ihrem Umfang aber nicht beschränkt ist, werden nun anhand der Zeichnung näher beschrieben.

Es zeigt:

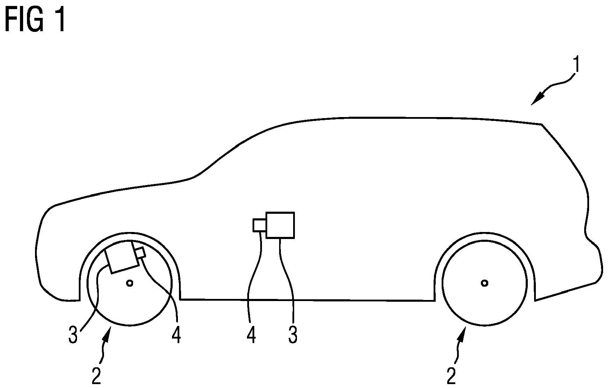

Fig. 1: Ein Fahrzeug, dessen Fahrzeugzustand mittels des erfindungsgemäßen Verfahrens bestimmt werden kann.

In der Figur 1 ist ein Fahrzeug 1, dessen Fahrzeugzustand mittels des erfindungsgemäßen Verfahrens bestimmt werden kann, schematisch dargestellt. Das Fahrzeug 1 weist mindestens einen Reifen 2 auf. Das Fahrzeug 1 weist ferner eine Erfassungsvorrichtung 3 auf, wobei die Erfassungsvorrichtung 3 zur Erfassung einer physikalisch beschreibbaren Größe des Fahrzeugs 1 vorgesehen ist und wobei die Erfassungsvorrichtung 3 eine Verarbeitungskomponente 4 aufweist, wobei mittels der Verarbeitungskomponente 4 die erfasste physikalisch beschreibbare Größe verarbeitet werden kann.

Mittels der Erfassungsvorrichtung 3 kann insbesondere eine physikalisch beschreibbare Größe des mindestens einen Reifens 2 erfasst werden.

Insbesondere weist das Fahrzeug 1 eine Mehrzahl von Erfassungsvorrichtungen 3 auf. Dabei ist jede der Erfassungsvorrichtungen 3 zur Erfassung von physikalisch beschreibbaren Größen vorgesehen.

Gemäß der in der Figur 1 schematisch dargestellten Ausführungsform ist eine Erfassungsvorrichtung 3 im Fahrzeug 1 und eine weitere Erfassungsvorrichtung 3 speziell in mindestens einem Reifen 2 angeordnet.

### Bezugszeichenliste

- 1: Fahrzeug
- 2: Reifen
- 3: Erfassungsvorrichtung
- 4: Verarbeitungskomponente

## Patentansprüche

1. Verfahren zur Bestimmung eines Fahrzeugzustands eines Fahrzeugs (1), wobei das Fahrzeug (1) mindestens einen Reifen (2) aufweist, aufweisend einen der folgenden Schritte:
- Bereitstellen eines Fahrzeugs (1), wobei das Fahrzeug (1) eine Erfassungsvorrichtung (3) aufweist, wobei die Erfassungsvorrichtung (3) zur Erfassung einer physikalisch beschreibbaren Größe des Fahrzeugs (1) vorgesehen ist und wobei die Erfassungsvorrichtung (3) eine Verarbeitungskomponente (4) aufweist, wobei mittels der Verarbeitungskomponente (4) die erfasste physikalisch beschreibbare Größe verarbeitet werden kann;
- Erfassen einer physikalisch beschreibbaren Größe des Fahrzeugs (1) mittels der Erfassungsvorrichtung (3);
- Zuordnen eines Erfassungswertes zu der erfassten physikalisch beschreibbaren Größe, wobei das Verfahren durch die weiteren Schritte gekennzeichnet ist:
- Vergleichen des Erfassungswertes mit einem Schwellenwert;
- Bestimmen eines Fahrzeugzustands in Abhängigkeit des Vergleichens des Erfassungswertes mit einem Schwellenwert.

2. Verfahren nach Anspruch 1, **dadurch gekennzeichnet, dass** es sich bei der physikalisch beschreibbaren Größe um eine Beschleunigung des Fahrzeugs (1) handelt oder um eine räumliche Position des Fahrzeugs (1) handelt oder um eine Beschleunigung des mindestens einen Reifens (2) handelt oder um eine Innentemperatur des mindestens einen Reifens (2) handelt oder um eine Längsbeschleunigung oder Querbeschleunigung des Fahrzeugs (1) handelt oder um eine überlagerte Längs- und Querbeschleunigung des Fahrzeugs (1) handelt oder um eine Beschleunigung des mindestens einen Reifens (2) handelt oder um eine Längsbeschleunigung oder Querbeschleunigung des mindestens einen Reifens (2) handelt oder um eine überlagerte Längs- und Querbeschleunigung des mindestens einen Reifens (2) handelt.

3. Verfahren nach einem vorhergehenden Ansprüche, **dadurch gekennzeichnet, dass** die physikalisch beschreibbare Größe mehrfach zeitlich nachfolgend erfasst wird und der jeweils erfassten physikalisch beschreibbaren Größe ein jeweiliger Erfassungswert zugeordnet wird, wobei jeder jeweilige Erfassungswert mit dem Schwellenwert verglichen wird, wobei der Fahrzeugzustand des Fahrzeugs (1) in Abhängigkeit einer Zeitreihenanalyse des Vergleichens des jeweiligen Erfassungswertes mit dem Schwellenwert bestimmt wird.

4. Verfahren nach dem vorhergehenden Anspruch, **dadurch gekennzeichnet, dass** die physikalisch beschreibbare Größe in regelmäßigen Zeitintervallen, beispielsweise alle Sekunden 1 bis 10 oder 5 Minuten, erfasst wird.

5. Verfahren nach einem der vorhergehenden Ansprüche 3 oder 4, **dadurch gekennzeichnet, dass** ein Mittelwert einer Mehrzahl jeweiliger Erfassungswerte gebildet und der Mittelwert mit dem Schwellenwert verglichen wird, wobei der Fahrzeugzustand des Fahrzeugs (1) in Abhängigkeit des Vergleichens des Mittelwertes mit dem Schwellenwert bestimmt wird.

6. Verfahren nach dem vorhergehenden Anspruch, **dadurch gekennzeichnet, dass** es sich bei dem Mittelwert um einen fließenden Mittelwert handelt.

7. Verfahren nach einem der vorhergehenden Ansprüche, **dadurch gekennzeichnet, dass** die Geschwindigkeit des Fahrzeugs (1) bestimmt wird und der Fahrzeugzustand des Fahrzeugs (1) in Abhängigkeit der Geschwindigkeit des Fahrzeugs (1) bestimmt wird.

8. Verfahren nach einem der vorhergehenden Ansprüche, **dadurch gekennzeichnet, dass** eine Zeitdauer, während der ein Schwellenwert durch einen Erfassungswert erreicht oder überschritten wird, bestimmt wird und der Fahrzeugzustand des Fahrzeugs (1) in Abhängigkeit dieser Zeitdauer bestimmt wird.

9. Verfahren nach einem der vorhergehenden Ansprüche, **dadurch gekennzeichnet, dass** eine Fahrbahnbedingung bestimmt wird und der Fahrzeugzustand des Fahrzeugs (1) in Abhängigkeit dieser Fahrbahnbedingung bestimmt wird.

10. Verfahren nach einem der vorhergehenden Ansprüche, **dadurch gekennzeichnet, dass** eine Umweltbedingung bestimmt wird und der Fahrzeugzustand des Fahrzeugs (1) in Abhängigkeit dieser Umweltbedingung bestimmt wird.

11. Verfahren nach einem der vorhergehenden Ansprüche, **dadurch gekennzeichnet, dass** die physikalisch beschreibbare Größe nach regelmäßigen Fahrtstrecken erfasst wird und der jeweils erfassten physikalisch beschreibbaren Größe ein jeweiliger Erfassungswert zugeordnet wird, wobei jeder jeweilige Erfassungswert mit dem Schwellenwert verglichen wird, wobei der Fahrzeugzustand des Fahrzeugs (1) in Abhängigkeit einer Analyse des Vergleichens des jeweiligen Erfassungswertes mit dem Schwellenwert bestimmt wird.

12. Verfahren nach einem der vorhergehenden Ansprüche, **dadurch gekennzeichnet, dass** mittels der Erfassungsvorrichtung ein Signal gesendet wird, wobei das Signal eine Information über die erfasste physikalisch beschreibbare Größe enthält.

13. Verfahren nach dem vorhergehenden Anspruch, **dadurch gekennzeichnet, dass** das Signal Informationen über eine Mehrzahl von erfassten physikalisch beschreibbaren Größen enthält.
